# EUROPEAN PATENT SPECIFICATION

(11) **EP 3 305 591 B1**
(45) Date of publication and mention of the grant of the patent: **24.04.2019**
(21) Application number: 17194451.5
(22) Date of filing: 02.10.2017
(51) Int. Cl.: B62J 6/00, B62J 6/02, B60Q 1/00

(54) **STRADDLED VEHICLE**
GRÄTSCHSITZFAHRZEUG
VÉHICULE À ENFOURCHER

(30) Priority: 04.10.2016 JP 2016196792
(43) Date of publication of application: 11.04.2018
(73) Proprietor: Yamaha Hatsudoki Kabushiki Kaisha, Iwata-shi, Shizuoka-ken 438-8501 (JP)
(72) Inventor: YAMADA, Takahiro, Shizuoka, 438-8501 (JP); HONDA, Munehisa, Tokyo, 171-0033 (JP)
(74) Representative: Moreland, David

(56) References cited:
- EP-A1- 2 336 012
- EP-A1- 2 949 555

## Description

### FIELD OF INVENTION

The present invention relates to a straddle-type vehicle or saddle-ride type vehicle. In particular, but not exclusively, the present invention relates to a straddled vehicle including position lamps.

### BACKGROUND TO INVENTION

Straddled vehicles, such as motorcycles, have smaller vehicle sizes than four-wheeled vehicles, such as automobiles. In view of this, straddled vehicles are specially designed to be visible to others. For example, straddled vehicles including a pair of position lamps located to the left and right have been proposed (see, for example, JP 2015-227102 A and JP 2016-5942 A).

The inventors of the present application did research to find a way to further improve the visibility of a straddled vehicle including position lamps. They focused on the arrangement and shapes of the position lamps and did further research. They reached the finding that the visibility of a vehicle will be further improved by improving how the translucent surfaces of the lens of the position lamps appear. The present invention was made based on this finding.

It is an object of at least one embodiment of at least one aspect of the present invention to obviate or at least mitigate one or more problems or disadvantages in the prior art. An object of at least one embodiment of at least one aspect of the present invention is to seek to improve the visibility of a straddled vehicle including position lamps.

EP 2 336 012 A1 (HONDA) provides a front portion structure of a saddle-ride type vehicle capable of avoiding restrictions of a headlight and performing sufficient air guide. Further, to provide a front portion structure of a saddle-ride type vehicle which is constructed to install a combination lamp on a front cowl and improves visibility of a winker of one of left and right sides of the vehicle from the other side. A lens of the headlight is provided with lens-side recess portions recessed toward the rear of the vehicle, and the recess portions are provided so as to continue to lower open ends of a gap between the front cowl and a windscreen. Further, the lens-side recess portions are formed as concavities which are recessed to the rear of the vehicle and extend in a vertical direction in front of the winder lamps as well s on the inner side of a vehicle width direction.

### SUMMARY OF INVENTION

According to the present invention there is provided a straddled vehicle according to the appended claims.

In the above-described straddled vehicle, the position lamp system may include a pair of first translucent sub-surfaces, located to the left and right. Each of the left and right first translucent sub-surfaces may pass light emitted from the light source. Thus, when one looks at the straddled vehicle from the front of the vehicle, he/she can see light passed by each of the left and right first translucent sub-surfaces.

In the above-described straddled vehicle, the forwardmost point of the outward edge, as determined along the left-right direction of the vehicle, of each of the left and right first translucent sub-surfaces may be located forward of the forwardmost point of its inward edge, as determined along the left-right direction of the vehicle as viewed from the top of the vehicle. In other words, the forwardmost point of the left edge, as determined along the left-right direction of the vehicle, of the left first translucent sub-surfaces may be located forward of the forwardmost point of its right edge of the left first translucent sub-surfaces, as viewed from the top of the vehicle. The forwardmost point of the right edge, as determined along the left-right direction of the vehicle, of the right first translucent sub-surfaces may be located forward of the forwardmost point of its left edge of the right first translucent sub-surfaces, as viewed from the top of the vehicle. Thus, when one looking at the straddled vehicle moves to one of the left and right (to the left or to the right) from the front of the straddled vehicle, he/she may have difficulty seeing one of the left and right first translucent sub-surfaces, while he/she may easily see the other first translucent sub-surface. That is, that one of the left and right first translucent sub-surfaces which is located closer to him/her may become less visible, while that first translucent sub-surface which is located farther from him/her becomes more visible. To sum up, even when one looking at the straddled vehicle moves to one of the left and right (to the left or to the right) from the front of the straddled vehicle, he/she can see one of the left and right first translucent sub-surfaces (more specifically, the first translucent sub-surface located farther from him/her). This seeks to improve the visibility of the vehicle.

The left and right first translucent sub-surfaces may be suitably separated from each other as determined along the left-right direction of the vehicle. The left and right first translucent sub-surfaces may be surfaces that may be exposed and visible as well as optionally being translucent. That is, the left and right first translucent sub-surfaces may not be covered by other member such as front cover. The outward edge of each of the left and right first translucent sub-surfaces may be the outward edge of the exposed and visible surface of the lens as determined along the left-right direction of the vehicle. The inward edge of each of the left and right first translucent sub-surfaces may be the inward edge of the exposed and visible surface of the lens as determined along the left-right direction of the vehicle. The left and right first translucent sub-surfaces may be shaped to be mirror images of each other with respect to the center line passing through the center of the vehicle as determined along the left-right direction and may extend in the top-bottom direction of the vehicle as viewed from the front of the vehicle, for example. The left and right first translucent sub-surfaces may be located at the same position as determined along the top-bottom direction of the vehicle, for example.

The left and right first translucent sub-surfaces may be provided by one lens, or provided by separate lenses. Such may be separate from each other. For example, the position lamp system may include a left position lamp including a lens providing the first translucent sub-surface located to the left and a right position lamp including a lens providing the first translucent sub-surface located to the right.

The light source may be not limited to any particular one. The light source may be, for example, an illuminator such as light-emitting diode (LED).

One illuminator may be provided for the position lamp system. In such implementations, the light source further may include a light guide for guiding light emitted by the illuminator to the left and right first translucent sub-surfaces.

A plurality of illuminators may be provided for the position lamp system. In such implementations, at least one illuminator may be provided for each of the left and right first translucent sub-surfaces.

The lens/lenses may be colorless and transparent, or may be colored and transparent.

The translucent surface system is not limited to any particular shape as long as it is capable of pass light emitted by the light source. The translucent surface system may include a portion visible from the front of the vehicle. The translucent surface system may include a portion providing a front edge of the lens as viewed from the top of the vehicle. The translucent surface system may include a portion located rearward of the front edge of the lens as viewed from the top of the vehicle.

Each first translucent sub-surface is not limited to any particular shape as long as it is capable of passing light emitted by the light source. The first translucent sub-surface is not limited to any particular shape as long as it extends in the left-right direction of the vehicle. The shape of it extending in the left-right direction of the vehicle may be such that the dimension thereof as measured in the left-right direction of the vehicle is larger than the dimension thereof as measured in the top-bottom direction of the vehicle as viewed from the front of the vehicle; however, the shape is not limited to ones where the dimension thereof as measured in the left-right direction of the vehicle is larger than the dimension thereof as measured in the top-bottom direction of the vehicle. That is, the first translucent sub-surface suitably has a shape where it may have a length in the left-right direction of the vehicle.

Each first translucent sub-surface may include a portion visible from the front of the vehicle. The first translucent sub-surface may include a portion providing a front edge of the lens as viewed from the top of the vehicle. The first translucent sub-surface may include a portion located rearward of the front edge of the lens as viewed from the top of the vehicle.

The inward edge of each first translucent sub-surface as determined along the left-right direction of the vehicle need not extend straight in the top-bottom direction of the vehicle over the entire length as measured in the top-bottom direction of the vehicle as viewed from the front of the vehicle. At least a part of the inward edge, as determined along the left-right direction of the vehicle, of the first translucent sub-surface may extend in a direction angled relative to the top-bottom direction of the vehicle as viewed from the front of the vehicle. In such implementations, the angle of the portion of the inward edge, as determined along the left-right direction of the vehicle, of the first translucent sub-surface relative to the top-bottom direction of the vehicle may be constant or may not be constant. As viewed from the front of the vehicle, the inward edge, as determined along the left-right direction of the vehicle, of the first translucent sub-surface may be straight or may be curved.

The outward edge of each first translucent sub-surface as determined along the left-right direction of the vehicle need not extend straight in the top-bottom direction of the vehicle over the entire length as measured in the top-bottom direction of the vehicle as viewed from the front of the vehicle. At least a part of the outward edge, as determined along the left-right direction of the vehicle, of the first translucent sub-surface may extend in a direction angled relative to the top-bottom direction of the vehicle as viewed from the front of the vehicle. In such implementations, the angle of the portion of the outward edge, as determined along the left-right direction of the vehicle, of the first translucent sub-surface relative to the top-bottom direction of the vehicle may be constant or may not be constant. As viewed from the front of the vehicle, the outward edge, as determined along the left-right direction of the vehicle, of the first translucent sub-surface may be straight or may be curved.

As viewed from the front of the vehicle, the outward edge of the first translucent sub-surface as determined along the left-right direction of the vehicle may be parallel to the inward edge of the first translucent sub-surface as determined along the left-right direction of the vehicle, or may not be parallel thereto.

As viewed from the top of the vehicle, the outward edge of the first translucent sub-surface as determined along the left-right direction of the vehicle may be parallel to the inward edge of the first translucent sub-surface as determined along the left-right direction of the vehicle, or may not be parallel thereto.

As viewed from the top of the vehicle, at least a part of the front edge of each first translucent sub-surface may extend in a direction angled relative to the left-right direction of the vehicle. Thus, as viewed from the top of the vehicle, the forwardmost point of the outward edge, as determined along the left-right direction of the vehicle, of the first translucent sub-surface may be positioned forward of the forwardmost point of the inward edge, as determined along the left-right direction of the vehicle, of the first translucent sub-surface. The angle of the portion of the first translucent sub-surface relative to the left-right direction of the vehicle as viewed from the top of the vehicle may be constant or may not be constant. As viewed from the top of the vehicle, the angle of the front edge of the first translucent sub-surface may be straight or may be curved.

Each first translucent sub-surface may be, for example, located at the middle of the associated translucent surface as determined along the left-right direction of the vehicle, or may be located inward of the middle of the translucent surface as determined along the left-right direction of the vehicle. The inward edge of the first translucent sub-surface as determined along the left-right direction of the vehicle need not coincide with the inward edge of the translucent surface as determined along the left-right direction of the vehicle.

As viewed from the side of the vehicle, at least a part of the outward edge, as determined along the left-right direction of the vehicle, of each first translucent sub-surface may extend in a direction angled relative to the top-bottom direction of the vehicle. In such implementations, the outward edge of the first translucent sub-surface as determined along the left-right direction of the vehicle may include a portion not located at the forwardmost point thereof as viewed from the top of the vehicle. This portion may be located rearward of the forwardmost point of the inward edge, as determined along the left-right direction of the vehicle, of the first translucent sub-surface as viewed from the top of the vehicle.

As viewed in the side view of the vehicle, at least a part of the inward edge, as determined along the left-right direction of the vehicle, of each first translucent sub-surface may extend in a direction angled relative to the top-bottom direction of the vehicle.

As viewed from the top of the vehicle, the dimension of the front edge of each first translucent sub-surface as measured in the left-right direction of the vehicle may be larger than the dimension of the front edge of the first translucent sub-surface as measured in the front-rear direction of the vehicle, for example. In such implementations, when one looking at the straddled vehicle moves to one of the left and right (to the left or to the right) from the front of the straddled vehicle, he/she can easily view light passed by one of the left and right first translucent sub-surfaces.

As viewed in the front view of the vehicle, the outward edge of each first translucent sub-surface as determined along the left-right direction of the vehicle may be located at a different position as determined along the top-bottom direction of the vehicle from that of the inward edge, as determined along the left-right direction of the vehicle, of the first translucent sub-surface. In other words, as viewed in the front view of the vehicle, the left edge of the left first translucent sub-surface as determined along the left-right direction of the vehicle may be located at a different position as determined along the top-bottom direction of the vehicle from that of the right edge, as determined along the left-right direction of the vehicle, of the left first translucent sub-surface. And/or, as viewed in the front view of the vehicle, the right edge of the right first translucent sub-surface as determined along the left-right direction of the vehicle may be located at a different position as determined along the top-bottom direction of the vehicle from that of the left edge, as determined along the left-right direction of the vehicle, of the right first translucent sub-surface. Implementations where the outward and inward edges of the first translucent sub-surface as determined along the left-right direction of the vehicle are located at different positions as determined along the top-bottom direction of the vehicle include not only implementations where, if one of the outward and inward edges, as determined along the left-right direction of the vehicle, of the first translucent sub-surface were moved toward the other in the left-right direction of the vehicle, the one would not overlap the other, but also implementations where the one woud overlap the other.

As viewed from the front of the vehicle, at least a part of the outward edge, as determined along the left-right direction of the vehicle, of each first translucent sub-surface may be located lower than the inward edge, as determined along the left-right direction of the vehicle, of the first translucent sub-surface. In other words, as viewed from the front of the vehicle, at least a part of the left edge of the left first translucent sub-surface may be located lower than the right edge of the left first translucent sub-surface. And/or, as viewed from the front of the vehicle, at least a part of the right edge of the right first translucent sub-surface may be located lower than the left edge of the right first translucent sub-surface. As viewed from the front of the vehicle, at least a part of the outward edge, as determined along the left-right direction of the vehicle, of the first translucent sub-surface may be located higher than the inward edge, as determined along the left-right direction of the vehicle, of the first translucent sub-surface. In other words, as viewed from the front of the vehicle, at least a part of the left edge of the left first translucent sub-surface may be located higher than the right edge of the left first translucent sub-surface. And/or, as viewed from the front of the vehicle, at least a part of the right edge of the right first translucent sub-surface may be located higher than the left edge of the right first translucent sub-surface.

The translucent surface system may further include a pair of second translucent sub-surfaces located to the left and right. The left and right second translucent sub-surfaces may be separated from each other as determined along the left-right direction of the vehicle. Each of the left and right second translucent sub-surfaces may be visible from the side of the vehicle. As viewed from the top of the vehicle, the forwardmost point of the outward edge, as determined along the left-right direction of the vehicle, of each of the left and right second translucent sub-surfaces may be located rearward of the forwardmost point of its inward edge as determined along the left-right direction of the vehicle. In other words, as viewed from the top of the vehicle, the forwardmost point of the left edge, as determined along the left-right direction of the vehicle, of the left second translucent sub-surfaces may be located rearward of the forwardmost point of the right edge of the left second translucent sub-surfaces. As viewed from the top of the vehicle, the forwardmost point of the right edge, as determined along the left-right direction of the vehicle, of the right second translucent sub-surfaces may be located rearward of the forwardmost point of the left edge of the right second translucent sub-surfaces. The left second translucent sub-surface may be located to the left of the left first translucent sub-surface. The right second translucent sub-surface may be located to the right of the right first translucent sub-surface.

In such implementations, when one looking at the straddled vehicle moves to one of the left and right (to the left or to the right) from the front of the straddled vehicle, he/she can easily view that one of the left and right second translucent sub-surfaces which is located closer to him/her. This seeks to further improve the visibility of the vehicle.

The left and right second translucent sub-surfaces may be surfaces that are exposed and visible as well as optionally being translucent. That is, the left and right second translucent sub-surfaces may not be covered by other member such as front cover. The outward edge of each of the left and right second translucent sub-surfaces may be the outward edge of the exposed and visible surface of the lens as determined along the left-right direction of the vehicle. The inward edge of each of the left and right second translucent sub-surfaces may be the inward edge of the exposed and visible surface of the lens as determined along the left-right direction of the vehicle. Each second translucent sub-surface is not limited to any particular shape as long as it is capable of passing light emitted by the light source. The second translucent sub-surface is not limited to any particular shape as long as it extends in the left-right direction of the vehicle. The shape of it extending in the left-right direction of the vehicle is not limited to ones where the dimension thereof as measured in the left-right direction of the vehicle is larger than the dimension thereof as measured in the top-bottom direction of the vehicle as viewed from the front of the vehicle. That is, the second translucent sub-surface suitably may have a shape where it has a length in the left-right direction of the vehicle.

Each second translucent sub-surface may include a portion visible from the front of the vehicle. The second translucent sub-surface may include a portion providing a front edge of the lens as viewed from the top of the vehicle. The second translucent sub-surface may include a portion located rearward of the front edge of the lens as viewed from the top of the vehicle.

The inward edge of each second translucent sub-surface as determined along the left-right direction of the vehicle need not extend straight in the top-bottom direction of the vehicle over the entire length as measured in the top-bottom direction of the vehicle as viewed from the front of the vehicle. At least a part of the inward edge, as determined along the left-right direction of the vehicle, of the second translucent sub-surface may extend in a direction angled relative to the top-bottom direction of the vehicle as viewed from the front of the vehicle. In such implementations, the angle of the portion of the inward edge, as determined along the left-right direction of the vehicle, of the second translucent sub-surface relative to the top-bottom direction of the vehicle may be constant or may not be constant. As viewed from the front of the vehicle, the inward edge, as determined along the left-right direction of the vehicle, of the second translucent sub-surface may be straight or may be curved.

The outward edge of each second translucent sub-surface as determined along the left-right direction of the vehicle need not extend straight in the top-bottom direction of the vehicle over the entire length as measured in the top-bottom direction of the vehicle as viewed from the front of the vehicle. At least a part of the outward edge, as determined along the left-right direction of the vehicle, of the second translucent sub-surface may extend in a direction angled relative to the top-bottom direction of the vehicle as viewed from the front of the vehicle. In such implementations, the angle of the portion of the outward edge, as determined along the left-right direction of the vehicle, of the second translucent sub-surface relative to the top-bottom direction of the vehicle may be constant or may not be constant. As viewed from the front of the vehicle, the outward edge, as determined along the left-right direction of the vehicle, of the second translucent sub-surface may be straight or may be curved.

As viewed from the front of the vehicle, the outward edge of the second translucent sub-surface as determined along the left-right direction of the vehicle may be parallel to the inward edge of the second translucent sub-surface as determined along the left-right direction of the vehicle, or may not be parallel thereto.

As viewed from the top of the vehicle, the outward edge of the second translucent sub-surface as determined along the left-right direction of the vehicle may be parallel to the inward edge of the second translucent sub-surface as determined along the left-right direction of the vehicle, or may not be parallel thereto.

As viewed from the top of the vehicle, at least a part of the front edge of each second translucent sub-surface may extend in a direction angled relative to the left-right direction of the vehicle. Thus, as viewed from the top of the vehicle, the forwardmost point of the outward edge, as determined along the left-right direction of the vehicle, of the second translucent sub-surface may be positioned rearward of the forwardmost point of the inward edge, as determined along the left-right direction of the vehicle, of the second translucent sub-surface. The angle of the portion of the second translucent sub-surface relative to the left-right direction of the vehicle as viewed from the top of the vehicle may be constant or may not be constant. As viewed from the top of the vehicle, the front edge of the second translucent sub-surface may be straight or may be curved.

Each second translucent sub-surface may only be required to be located outward of the corresponding first translucent sub-surface as determined along the left-right direction of the vehicle. The second translucent sub-surface may be, for example, located at the middle of the associated translucent surface as determined along the left-right direction of the vehicle, or may be located outward of the middle thereof as determined along the left-right direction of the vehicle. The outward edge of the second translucent sub-surface as determined along the left-right direction of the vehicle need not coincide with the outward edge of the translucent surface as determined along the left-right direction of the vehicle.

As viewed from the side of the vehicle, at least a part of the inward edge, as determined along the left-right direction of the vehicle, of each second translucent sub-surface may extend in a direction angled relative to the top-bottom direction of the vehicle. In such implementations, the inward edge of the second translucent sub-surface as determined along the left-right direction of the vehicle may include a portion not located at the forwardmost point thereof as viewed from the top of the vehicle. This portion may be located rearward of the forwardmost point of the outward edge, as determined along the left-right direction of the vehicle, of the second translucent sub-surface as viewed from the top of the vehicle.

As viewed from the side of the vehicle, at least a part of the outward edge, as determined along the left-right direction of the vehicle, of each second translucent sub-surface may extend in a direction angled relative to the top-bottom direction of the vehicle.

As viewed from the top of the vehicle, the dimension of the front edge of each second translucent sub-surface as measured in the front-rear direction of the vehicle may be larger than the dimension of the front edge of the second translucent sub-surface as measured in the left-right direction of the vehicle, for example. In such implementations, when one looking at the straddled vehicle moves to one of the left and right (to the left or to the right) from the front of the straddled vehicle, he/she can easily view light passed by one of the left and right second translucent sub-surfaces.

As viewed from the top of the vehicle, the forwardmost point of the inward edge, as determined along the left-right direction of the vehicle, of each second translucent sub-surface may be located at the same position as determined along the front-rear direction of the vehicle as the forwardmost point of the outward edge, as determined along the left-right direction of the vehicle, of the corresponding first translucent sub-surface, or may be located at a different position as determined along the front-rear direction of the vehicle.

As viewed from the front of the vehicle, the forwardmost point of the inward edge, as determined along the left-right direction of the vehicle, of each second translucent sub-surface may be located at the same position as determined along the top-bottom direction of the vehicle as the forwardmost point of the outward edge, as determined along the left-right direction of the vehicle, of the corresponding first translucent sub-surface, or may be located at a different position as determined along the top-bottom direction of the vehicle.

As viewed from the top of the vehicle, the dimension of the front edge of each first translucent sub-surface as measured in the left-right direction of the vehicle may be larger than the dimension of the front edge of the corresponding second translucent sub-surface as measured in the left-right direction of the vehicle, for example. In other words, as viewed from the top of the vehicle, the dimension of the front edge of the left first translucent sub-surface as measured in the left-right direction of the vehicle may be larger than the dimension of the front edge of the left second translucent sub-surface as measured in the left-right direction of the vehicle, for example. And/or, as viewed from the top of the vehicle, the dimension of the front edge of the right first translucent sub-surface as measured in the left-right direction of the vehicle may be larger than the dimension of the front edge of the right second translucent sub-surface as measured in the left-right direction of the vehicle, for example. In such implementations, the first translucent sub-surface may be larger than the second translucent sub-surface. That is, the first translucent sub-surface may be more conspicuous than the second translucent sub-surface. This may make it easier to view light passed by the first translucent sub-surface.

As viewed from the top of the vehicle, the dimension of the front edge of each first translucent sub-surface as measured in the front-rear direction of the vehicle may be larger than the dimension of the front edge of the corresponding second translucent sub-surface as measured in the front-rear direction of the vehicle, for example. In other words, as viewed from the top of the vehicle, the dimension of the front edge of the left first translucent sub-surface as measured in the front-rear direction of the vehicle may be larger than the dimension of the front edge of the left second translucent sub-surface as measured in the front-rear direction of the vehicle, for example. And/or, as viewed from the top of the vehicle, the dimension of the front edge of the right first translucent sub-surface as measured in the front-rear direction of the vehicle may be larger than the dimension of the front edge of the right second translucent sub-surface as measured in the front-rear direction of the vehicle, for example. In such implementations, the first translucent sub-surface may be larger than the second translucent sub-surface. That is, the first translucent sub-surface may be more conspicuous than the second translucent sub-surface. This may make it easier to view light passed by the first translucent sub-surface.

The translucent surface system may further include a pair of third translucent sub-surfaces located to the left and right. The left and right third translucent sub-surfaces may be separated from each other as determined along the left-right direction of the vehicle. At least a part of each of the left and right third translucent sub-surfaces may be located at the forwardmost point of the lens as viewed from the top of the vehicle. The left third translucent sub-surface may be located between the left first translucent sub-surface and the left second translucent sub-surface as determined along the left-right direction of the vehicle and connects the left first translucent sub-surface with the left second translucent sub-surface. The right third translucent sub-surface may be located between the right first translucent sub-surface and the right second translucent sub-surface as determined along the right-right direction of the vehicle and may connect the right first translucent sub-surface with the right second translucent sub-surface.

In such implementations, since the translucent surface system may further include a pair of third translucent sub-surfaces to the left and right, the visibility of the position lamps may further be improved.

Each third translucent sub-surface is not limited to any particular shape as long as it is capable of passing light emitted by the light source. The third translucent sub-surface may have such a shape that it extends in the left-right direction of the vehicle, for example. The shape of it extending in the left-right direction of the vehicle is not limited to ones where the dimension thereof as measured in the left-right direction of the vehicle is larger than the dimension thereof as measured in the top-bottom direction of the vehicle as viewed from the front of the vehicle. That is, the third translucent sub-surface suitably may have a shape where it has a length in the left-right direction of the vehicle.

Each third translucent sub-surface may include a portion visible from the front of the vehicle. The third translucent sub-surface may include a portion providing a front edge of the lens as viewed from the top of the vehicle. The third translucent sub-surface may include a portion located rearward of the front edge of the lens as viewed from the top of the vehicle.

As viewed from the top of the vehicle, the dimension of the front edge of each third translucent sub-surface as measured in the left-right direction of the vehicle may be smaller than the dimension of the front edge of the corresponding first translucent sub-surface as measured in the left-right direction of the vehicle, for example. In such implementations, the first translucent sub-surface may be larger than the third translucent sub-surface. That is, the first translucent sub-surface may be more conspicuous than the third translucent sub-surface. As a result, when one looking at the straddled vehicle moves to one of the left and right (to the left or to the right) from the front of the straddled vehicle, he/she can easily view light passed by one of the left and right first translucent sub-surfaces.

As viewed from the top of the vehicle, the dimension of the front edge of each third translucent sub-surface as measured in the left-right direction of the vehicle may be smaller than the dimension of the front edge of the corresponding second translucent sub-surface as measured in the left-right direction of the vehicle, for example. In such implementations, the second translucent sub-surface may be larger than the third translucent sub-surface. That is, the second translucent sub-surface may be more conspicuous than the third translucent sub-surface. As a result, when one looking at the straddled vehicle moves to one of the left and right (to the left or to the right) from the front of the straddled vehicle, he/she can easily view light passed by one of the left and right second translucent sub-surfaces.

The above-described straddled vehicle may further include a headlight. The headlight may be located between the left and right first translucent sub-surfaces as viewed from the front of the vehicle, for example. At least a part of each of the left and right first translucent sub-surfaces may be located lower than the forwardmost point of the headlight.

In such implementations, the first translucent sub-surface located farther from one looking at the straddled vehicle when he/she moves to one of the left and right (to the left or to the right) of the vehicle from the front of the straddled vehicle may not likely be hidden by the headlight. This may make it easier to view light passed by the first translucent sub-surface located farther from him/her.

Implementations where the headlight is located between the left and right first translucent sub-surfaces may include, for example, implementations where at least a part of the headlight may be located between the left and right first translucent sub-surfaces. The headlight need not be located at the same position as determined along the top-bottom direction of the vehicle as the left and right first translucent sub-surfaces.

The above-described straddled vehicle may further include a front cover. The front cover may be visible from the front of the vehicle. The position lamps may be attached to the front cover.

The front cover may include an upper front cover portion and/or a lower front cover portion. At least a part of the upper front cover portion may be located higher than the position lamps as viewed from the front of the vehicle. At least a part of the lower front cover portion may be located lower than the position lamps as viewed from the front of the vehicle. The left and right first translucent sub-surfaces may be located forward of the upper and lower front cover portions. This may make the left and right first translucent sub-surfaces conspicuous. This may make it easier to view light emitted by the first translucent sub-surfaces. For example, the forwardmost point of the left and right first translucent sub-surfaces may be located forward of the forwardmost point the upper and lower front cover portions as viewed from the top of the vehicle. And/or the forwardmost point of the left and right first translucent sub-surfaces may be located forward of the forwardmost point the upper and lower front cover portions as viewed from the side of the vehicle.

### BRIEF DESCRIPTION OF DRAWINGS

An embodiment of the present invention will now be described by way of example only, with reference to the accompanying drawings, which are:
- FIG. 1: a left side view of a motorcycle according to an embodiment of the present invention;
- FIG. 2: a front view of the headlight and nearby components of the motorcycle shown in FIG. 1;
- FIG. 3: a left side view of the headlight and nearby components of the motorcycle shown in FIG. 1;
- FIG. 4: a top view of the head and nearby components of the motorcycle shown in FIG. 1;
- FIG. 5: a front view of the left one of the pair of position lamps, to the left and right, of the motorcycle shown in FIG. 1;
- FIG. 6: a top view of the position lamp shown in FIG. 5;
- FIG. 7: a left side view of the position lamp shown in FIG. 5;
- FIG. 8: a cross-sectional view taken along line VIII-VIII in FIG. 5;
- FIG. 9: a cross-sectional view taken along line IX-IX in FIG. 5, illustrating the relationship between the upper and lower front cover portions and a position lamp;
- FIG. 10: a rear view of the position lamp shown in FIG. 5;
- FIG. 11: a rear view of the position lamp shown in FIG. 5 attached to the front cover;
- FIG. 12: a cross-sectional view taken along line XII-XII in FIG. 11;
- FIG. 13: a cross-sectional view taken along line XIII-XIII in FIG. 10;
- FIG. 14: a perspective view of the position lamp shown in FIG. 5, as observed before a coupler is attached;
- FIG. 15: a perspective view of the position lamp shown in FIG. 5 to which the coupler has been attached;
- FIG. 16A: a top view of the motorcycle shown in FIG. 1 where someone is looking at the position lamps thereof from the front;
- FIG. 16B: a top view of the motorcycle shown in FIG. 1 where someone is looking at the position lamps thereof after moving toward the left from the front; and
- FIG. 16C: a top view of the motorcycle shown in FIG. 1 where someone is looking at the position lamps thereof after moving toward the right from the front.

### DETAILED DESCRIPTION OF THE EMBODIMENTS

A straddled vehicle according to an embodiment of the present invention will now be described by way of example only, and with reference to the accompanying drawings. The present embodiment will be described where a motorcycle will be discussed as an example of the straddled vehicle. The same or corresponding parts in the drawings are labeled with the same numerals or characters and their description will not be repeated.

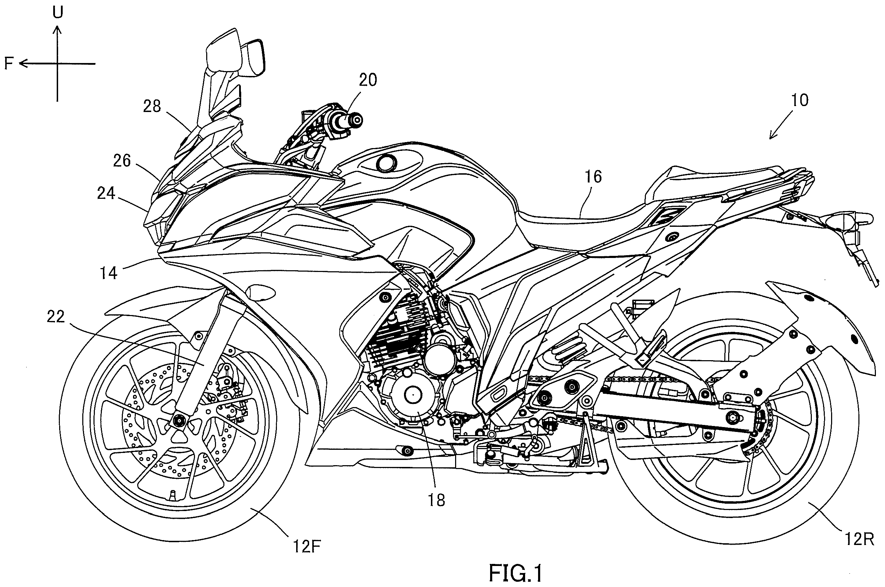

FIG. 1 is a left side view of a motorcycle 10. In the following description, "front/forward", "rear(ward)", "left" and "right" mean directions as perceived by a rider sitting on the seat 16 of the motorcycle 10. In FIG. 1, arrow "F" indicates the forward direction with respect to the motorcycle 10, and arrow "U" indicates the upward direction with respect to the motorcycle 10.

As shown in FIG. 1, the motorcycle 10 includes a front wheel 12F, a rear wheel 12R, a vehicle-body cover 14, a seat 16, an engine 18, handlebars 20, a front fork 22, and a headlight 24.

The front fork 22 supports the front wheel 12F such that the wheel is rotatable. The handlebars 20 may be operated to change the direction of advance of the front wheel 12F.

The front-body cover 14 covers a vehicle-body frame. The engine 18 is attached to the vehicle-body frame.

The rear wheel 12R is located rearward of the engine 18. Drive power from the engine 18 is transmitted to the rear wheel 12R to rotate the rear wheel 12R.

The seat 16 is located higher than and rearward of the engine 18.

The headlight 24 is supported by the vehicle-body frame (for example, head pipe). The headlight 24 is located forward of the handlebars 20.

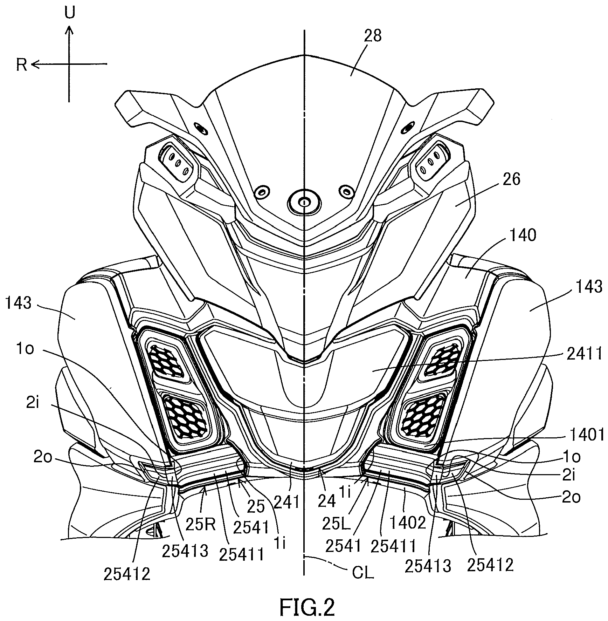

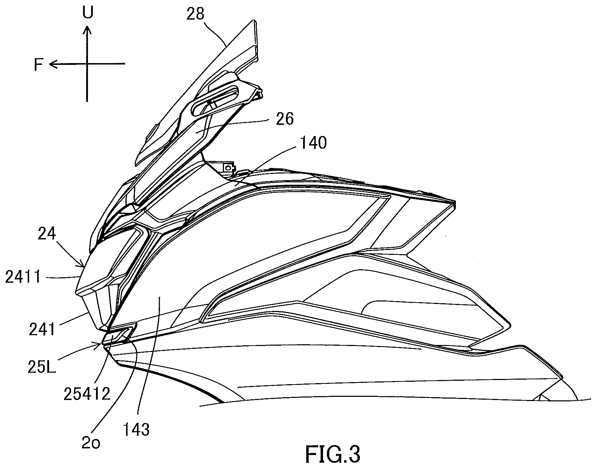

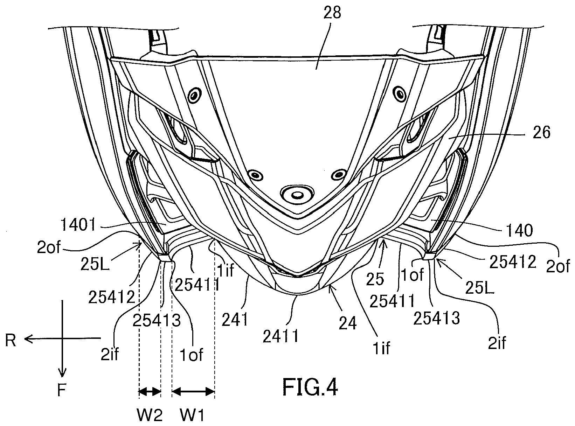

The motorcycle 10 will be described in more detail with reference to FIGS. 2, 3 and 4. FIG. 2 is a front view of the headlight 24 and nearby components of the motorcycle 10. FIG. 3 is a side view of the headlight 24 and nearby components of the motorcycle 10. FIG. 4 is a top view of the headlight 24 and nearby components of the motorcycle 10.

As shown in FIG. 2, the headlight 24 is located on the center line CL passing the center of the vehicle as determined along the left-right direction of the vehicle as viewed from the front of the vehicle. That is, the headlight 24 is located at the center of the vehicle as determined along the left-right direction of the vehicle.

As shown in FIG. 2, the headlight 24 includes a lens 241. The lens 241 is shaped to be symmetrical with respect to the center line CL as viewed from the front of the vehicle.

As shown in FIG. 2, the lens 241 includes a translucent surface system 2411. The translucent surface system 2411 passes light emitted by a light source of the headlight 24. The translucent surface system 2411 is shaped to be symmetrical with respect to the center line CL as viewed from the front of the vehicle.

As shown in FIG. 2, the translucent surface system 2411 extends in the left-right direction of the vehicle as viewed from the front of the vehicle. The translucent surface system 2411 extends in the top-bottom direction of the vehicle as viewed from the front of the vehicle. As viewed from the front of the vehicle, the dimension of the translucent surface system 2411 as measured in the left-right direction of the vehicle is larger than the dimension of the translucent surface system 2411 as measured in the top-bottom direction of the vehicle.

As shown in FIG. 3, the central portion of the translucent surface system 2411 as determined along the top-bottom direction of the vehicle protrudes forward of the vehicle. As shown in FIG. 4, the central portion of the translucent surface system 2411 as determined along the left-right direction of the vehicle protrudes forward of the vehicle.

The motorcycle 10 further includes a front cover 140, a position lamp system 25, an upper support cover 26, and a windshield 28. These components will be described below.

The front cover 140 is included in the vehicle-body cover 14. The front cover 140 is attached to the vehicle-body frame.

As shown in FIG. 2, the front cover 140 is located between a pair of front side covers 143 located to the left and right as determined along the left-right direction of the vehicle. The left and right front side covers 143 are included in the vehicle-body cover 14.

As shown in FIG. 2, the front cover 140 is located to surround the headlight 24 as viewed from the front of the vehicle. That is, the front cover 140 is visible from the front of the vehicle. The front cover 140 is located on the center line CL as viewed from the front of the vehicle. That is, the front cover 140 is located at the center of the vehicle as determined along the left-right direction of the vehicle.

As shown in FIGS. 2 and 4, the position lamp system 25 includes a pair of position lamps 25L and 25R located to the left and right. The left and right position lamps 25L and 25R are positioned to be mirror images of each other with respect to the center line CL as viewed from the front of the vehicle. The left and right position lamps 25L and 25R are located at the same position as determined along the top-bottom direction of the vehicle. Each of the left and right position lamps 25L and 25R will be described in detail further below.

As shown in FIGS. 2, 3 and 4, the upper support cover 26 is located above the front cover 140. As shown in FIG. 2, the upper support cover 26 is located on the center line CL as viewed from the front of the vehicle. That is, the upper support cover 26 is located at the center of the vehicle as determined along the left-right direction of the vehicle.

As shown in FIGS. 2, 3 and 4, the windshield 28 is located above the upper support cover 26. As shown in FIG. 2, the windshield 28 is located on the center line CL as viewed from the front of the vehicle. That is, the windshield 28 is located at the center of the vehicle as determined along the left-right direction of the vehicle.

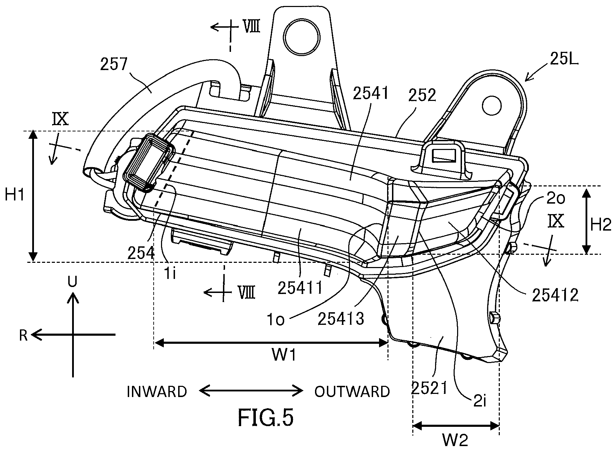

The left and right position lamps 25L and 25R will now be described with reference to FIGS. 5 to 9. In the present embodiment, the left and right position lamps 25L and 25R are mirror images of each other in shape and structure. In view of this, only the left position lamp 25L will be described and the right position lamp 25R will not be described.

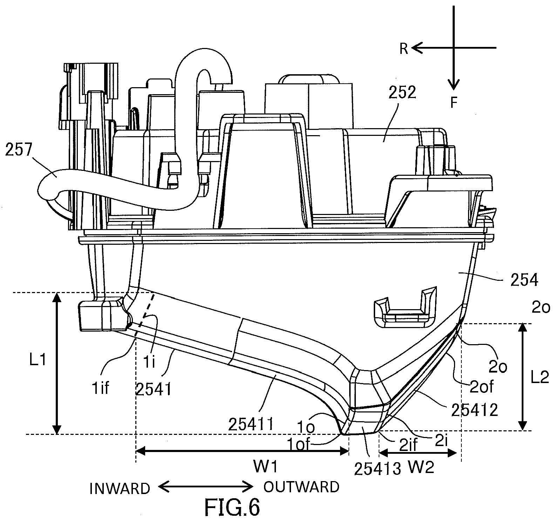

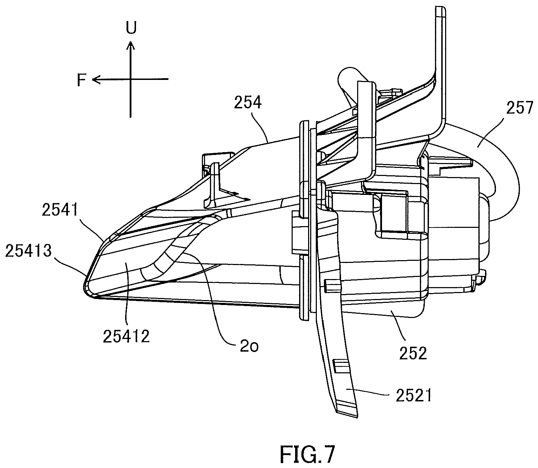

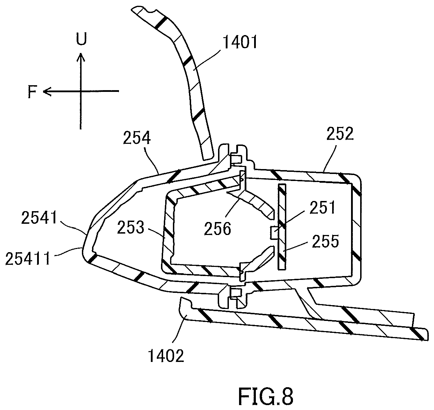

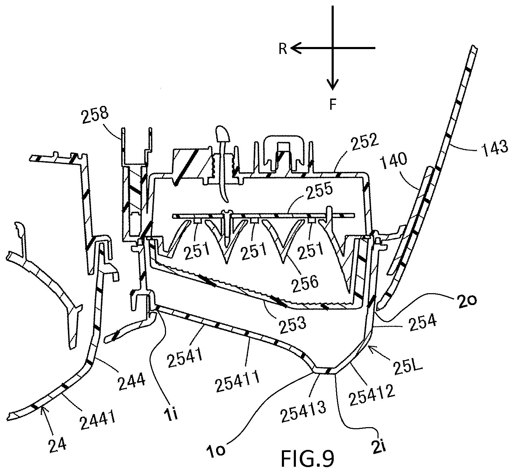

FIG. 5 is a front view of the position lamp 25L. FIG. 6 is a top view of the position lamp 25L. FIG. 7 is a left side view of the position lamp 25L. FIG. 8 is a cross-sectional view taken along line VIII-VIII in FIG. 5. FIG. 9 is a cross-sectional view taken along line IX-IX in FIG. 5, illustrating the relationship between upper and lower front cover portions 1401 and 1402, discussed below, and the position lamp 25L.

As shown in FIG. 9, the position lamp 25L includes three light sources 251, a case body 252, a lens 253, and a lens 254. These components will be described below.

As shown in FIG. 9, the three light sources 251 are light-emitting diodes. The three light sources 251 emit light forward with respect to the vehicle. The three light sources 251 are provided on a substrate 255. A reflector 256 is provided forward of the substrate 255. The reflector 256 reflects light emitted by the three light sources 251 and directs this light forward with respect to the vehicle. The substrate 255 and reflector 256 are attached to the case body 252.

As shown in FIG. 9, the lens 253 is located forward of the three light sources 251. The lens 253 is attached to the reflector 256.

As shown in FIG. 9, the lens 254 is located forward of the lens 253. That is, the lens 254 is located forward of the three light sources 251. The lens 254 is attached to the case body 252.

As shown in FIGS. 5, 6 and 9, the lens 254 includes a translucent surface 2541. The translucent surface 2541 passes light emitted by the three light sources 251.

As shown in FIGS. 5, 6 and 9, the translucent surface 2541 includes a translucent sub-surface 25411, a translucent sub-surface 25412 and a translucent sub-surface 25413. These components will be described below.

As shown in FIG. 2, the translucent sub-surface 25411 is visible from the front of the vehicle. The translucent sub-surface 25411 is an example of the first translucent sub-surface. The translucent sub-surface 25411 is exposed and visible. As shown in FIGS. 4 and 6, the translucent sub-surface 25411 includes a portion that provides a front edge of the lens 254 as viewed from the top of the vehicle. As shown in FIGS. 4 and 6, the translucent sub-surface 25411 includes a portion located rearward of the front edge of the lens 254 as viewed from the top of the vehicle. That is, the translucent sub-surface 25411 includes a portion that extends in a direction angled relative to the top-bottom direction of the vehicle.

As shown in FIG. 4 and 6, as viewed from the top of the vehicle, the forwardmost point 1of of the outward edge 1o , as determined along the left-right direction of the vehicle, of the translucent sub-surface 25411 is located forward of the forwardmost point 1if of the inward edge 1i, as determined along the left-right direction of the vehicle, of the translucent sub-surface 25411. Particularly, in the present embodiment, the entire outward edge 1o of the translucent sub-surface 25411 as determined along the left-right direction of the vehicle is located forward of the forwardmost point 1if of the inward edge 1i, as determined along the left-right direction of the vehicle, of the translucent sub-surface 25411. As viewed from the top of the vehicle, the dimension W1 of the translucent surface system 2411 as measured in the left-right direction of the vehicle is larger than the dimension L1 of the translucent surface system 2411 as measured in the front-rear direction of the vehicle. It should be noted that the translucent sub-surface 25411 is a translucent surface that is exposed and visible when the position lump is mounted in the vehicle.

As shown in FIGS. 2 and 5, as viewed from the front of the vehicle, the outward edge 1o of the translucent sub-surface 25411 as determined along the left-right direction of the vehicle is shifted downward from the inward edge 1i of the translucent sub-surface 25411 as determined along the left-right direction of the vehicle. That is, as viewed from the front of the vehicle, the outward edge 1o of the translucent sub-surface 25411 as determined along the left-right direction of the vehicle is located at a different position as determined along the top-bottom direction of the vehicle from that of the inward edge 1i of the translucent sub-surface 25411 as determined along the left-right direction of the vehicle. As viewed from the front of the vehicle, the dimension W1 of the translucent surface system 2411 as measured in the left-right direction of the vehicle is larger than the dimension H1 of the translucent surface system 2411 as measured in the top-bottom direction of the vehicle. As viewed from the top of the vehicle, the dimension H1 of the translucent surface system 2411 as measured in the top-bottom direction of the vehicle is larger than the dimension H2 of the translucent surface system 2412 as measured in the top-bottom direction of the vehicle.

Referring to FIGS. 2 and 3, at least a part of the translucent sub-surface 25411 is located lower than the forwardmost point of the headlight 24. As shown in FIG. 4, the translucent sub-surface 25411 is located rearward of the forwardmost point of the head light 24.

As shown in FIGS. 2, 4 and 8, the front cover 140 includes an upper front cover portion 1401 and a lower front cover portion 1402. At least a part of the upper front cover portion 1401 is located higher than the position lamp 25L. At least a part of the lower front cover portion 1402 is located lower than the position lamp 25L. The translucent sub-surface 25411 is located forward of the upper and lower front cover portions 1401 and 1402.

As shown in FIGS. 2 and 5, the translucent sub-surface 25412 is visible from the front of the vehicle. The translucent sub-surface 25412 is an example of the second translucent sub-surface. The translucent sub-surface 25412 is exposed and visible. As shown in FIGS. 4 and 6, the translucent sub-surface 25412 includes a portion that provides a front edge of the lens 254 as viewed from the top of the vehicle. As shown in FIGS. 4 and 6, the translucent sub-surface 25412 includes a portion located rearward of the front edge of the lens 254 as viewed from the top of the vehicle. That is, the translucent sub-surface 25412 includes a portion that extends in a direction angled relative to the top-bottom direction of the vehicle.

As shown in FIGS. 4 and 6, as viewed from the top of the vehicle, the translucent sub-surface 25412 is located outward of the translucent sub-surface 25411 as determined along the left-right direction of the vehicle. As viewed from the top of the vehicle, the forwardmost point 2if of the inward edge 2i, as determined along the left-right direction of the vehicle, of the translucent sub-surface 25412 is located forward of the forwardmost point 2of of the outward edge 2o, as determined along the left-right direction of the vehicle, of the translucent sub-surface 25412. Particularly, in the present embodiment, the entire inward edge 2i of the translucent sub-surface 25412 as determined along the left-right direction of the vehicle is located forward of the forwardmost point 2of of the outward edge 2o, as determined along the left-right direction of the vehicle, of the translucent sub-surface 25412. It should be noted that the translucent sub-surface 25412 is a translucent surface that is exposed and visible when the position lump is mounted in the vehicle.

As shown in FIGS. 3 and 7, the translucent sub-surface 25412 is visible from the side of the vehicle. It should be noted that the translucent sub-surface 25411 is not visible from the side of the vehicle.

As shown in FIGS. 5 and 6, as viewed from the front and top of the vehicle, the dimension W2 of the translucent sub-surface 25412 as measured in the left-right direction of the vehicle is smaller than the dimension W1 of the translucent sub-surface 25411 as measured in the left-right direction of the vehicle. That is, in the front and top of the vehicle, the dimension W1 of the translucent sub-surface 25411 as measured in the left-right direction of the vehicle is larger than the dimension W2 of the translucent sub-surface 25412 as measured in the left-right direction of the vehicle.

As shown in FIG. 6, as viewed from the top of the vehicle, the inward edge 2i of the translucent sub-surface 25412 as determined along the left-right direction of the vehicle is located substantially at the same position as determined along the front-rear direction of the vehicle as the outward edge 1o of the translucent sub-surface 25411 as determined along the left-right direction of the vehicle.

As shown in FIG. 6, as viewed from the top of the vehicle, the outward edge 2o of the translucent sub-surface 25412 as determined along the left-right direction of the vehicle is located rearward of the inward edge 1i of the translucent sub-surface 25411 as determined along the left-right direction of the vehicle. As viewed from the top of the vehicle, the dimension L1 of the translucent surface system 2411 as measured in the front-rear direction of the vehicle is larger than the dimension L2 of the translucent surface system 2412 as measured in the front-rear direction of the vehicle.

As shown in FIGS. 2 and 5, as viewed form the front of the vehicle, the outward edge 2o, as determined along the left-right direction of the vehicle, of the translucent sub-surface 25412 is shifted upward from the inward edge 2i, as determined along the left-right direction of the vehicle, of the translucent sub-surface 25412. That is, as viewed from the front of the vehicle, the outward edge 2o, as determined along the left-right direction of the vehicle, of the translucent sub-surface 25412 is located at a different position as determined along the top-bottom direction of the vehicle from that of the inward edge 2i, as determined along the left-right direction of the vehicle, of the translucent sub-surface 25412.

As shown in FIG. 2, the translucent sub-surface 25413 is visible from the front of the vehicle. The translucent sub-surface 25413 is an example of the third translucent sub-surface. The translucent sub-surface 25413 is exposed and visible. As shown in FIGS. 4 and 6, the translucent sub-surface 25413 includes a portion that provides a front edge of the lens 254 as viewed from the top of the vehicle. As shown in FIGS. 4 and 6, the translucent sub-surface 25413 includes a portion located rearward of the front edge of the lens 254 as viewed from the top of the vehicle. That is, the translucent sub-surface 25413 includes a portion that extends in a direction angled relative to the top-bottom direction of the vehicle.

As shown in FIGS. 4 and 6, as viewed from the top of the vehicle, the translucent sub-surface 25413 is located between the translucent sub-surfaces 25411 and 25412 as determined along the left-right direction of the vehicle. The translucent sub-surface 25413 connects the translucent sub-surfaces 25411 and 25412 such that the sub-surfaces are arranged in the left-right direction of the vehicle. The translucent sub-surface 25413 is located at the forwardmost point of the lens 254 as viewed from the top of the vehicle.

As shown in FIGS. 3 and 7, the translucent sub-surface 25413 is not visible from the side of the vehicle.

As shown in FIGS. 5 and 6, as viewed from the front and top of the vehicle, the dimension of the translucent sub-surface 25413 as measured in the left-right direction of the vehicle is smaller than the dimension W1 of the translucent sub-surface 25411 as measured in the left-right direction of the vehicle. That is, as viewed from the front and top of the vehicle, the dimension W1 of the translucent sub-surface 25411 as measured in the left-right direction of the vehicle is larger than the dimension of the translucent sub-surface 25413 as measured in the left-right direction of the vehicle.

As shown in FIGS. 5 and 6, as viewed from the front and top of the vehicle, the dimension of the translucent sub-surface 25413 as measured in the left-right direction of the vehicle is smaller than the dimension W2 of the translucent sub-surface 25412 as measured in the left-right direction of the vehicle. That is, as viewed from the front and top of the vehicle, the dimension W2 of the translucent sub-surface 25412 as measured in the left-right direction of the vehicle is larger than the dimension of the translucent sub-surface 25413 as measured in the left-right direction of the vehicle.

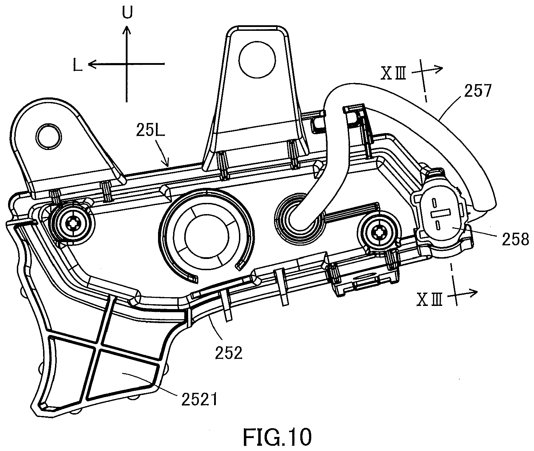

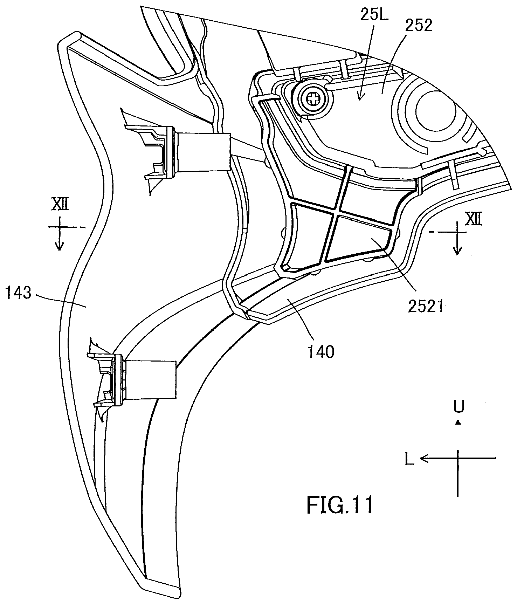

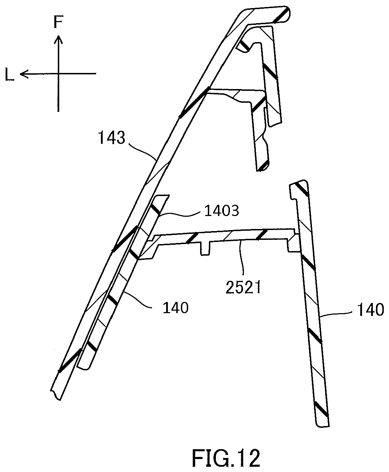

The position lamp 25L will be described in more detail with reference to FIGS. 10, 11 and 12. FIG. 10 is a rear view of the position lamp 25L. FIG. 11 is a rear view of the position lamp 25L attached to the front cover 140. FIG. 12 is a cross-sectional view taken along line XII-XII in FIG. 11.

As shown in FIG. 10, a light-shielding plate 2521 is provided on the case body 252. As shown in FIGS. 11 and 12, the light-shielding plate 2521 covers a recess 1403 defined by the front cover 140 when the position lamp 25L has been attached to the front cover 140. Thus, the light-shielding plate 2521 prevents light emitted by the light sources 251 of the position lamp 25L from leaking rearward with respect to the vehicle.

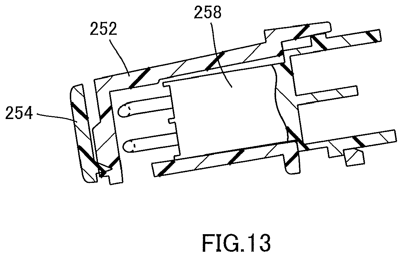

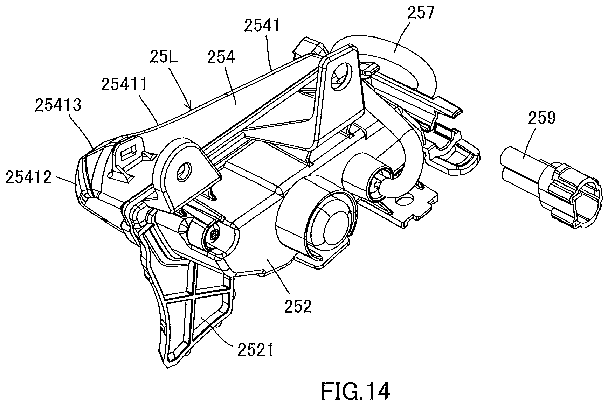

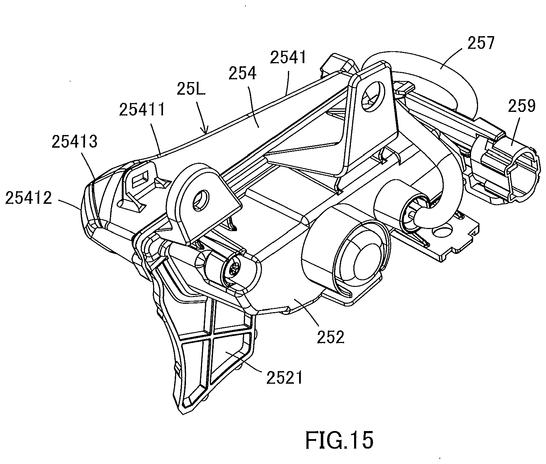

The position lamp 25L will be described in more detail with reference to FIGS. 10, 13, 14 and 15. FIG. 13 is a cross-sectional view taken along line XIII-XIII in FIG. 10. FIG. 14 is a perspective view of the position lamp 25L as observed before a coupler 259 is attached. FIG. 15 is a perspective view of the position lamp 25L to which the coupler 259 has been attached.

As shown in FIG. 10, a cable 257 is connected to the position lamp 25L for supplying the light sources 251 with electric power. The coupler 258 is attached to an end of the cable 257. As shown in FIG. 13, the coupler 258 is attached to the case body 252. As shown in FIGS. 14 and 15, to the coupler 258 is connected a coupler 259 that is attached to an end of a cable connected to the ECU, for example. The coupler 259 is connected to the coupler 258 and then attached to the case body 252.

According to the present embodiment, the coupler 258 is attached to the case body 252, allowing efficient connection of the coupler 259 with the coupler 258.

In the motorcycle 10, each of the left and right position lamps 25L and 25R includes a translucent sub-surface 25411. That is, the motorcycle 10 includes a pair of translucent sub-surfaces 25411 located to the left and right.

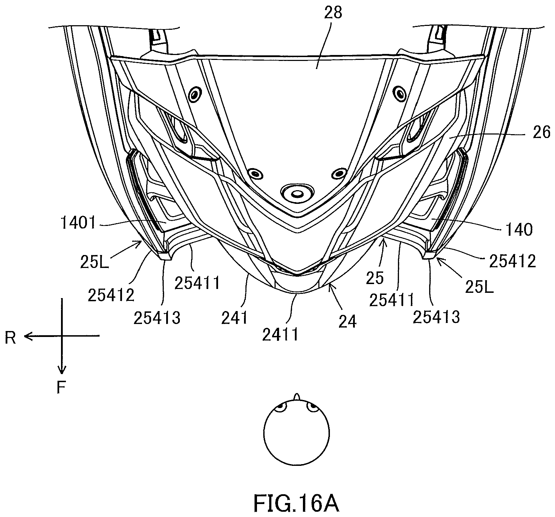

Each of the left and right translucent sub-surfaces 25411 passes light emitted from the associated three light sources 251. Thus, as shown in FIG. 16A, when one looks at the motorcycle 10 from the front of the vehicle, he/she can see light passed by the left and right translucent sub-surfaces 25411.

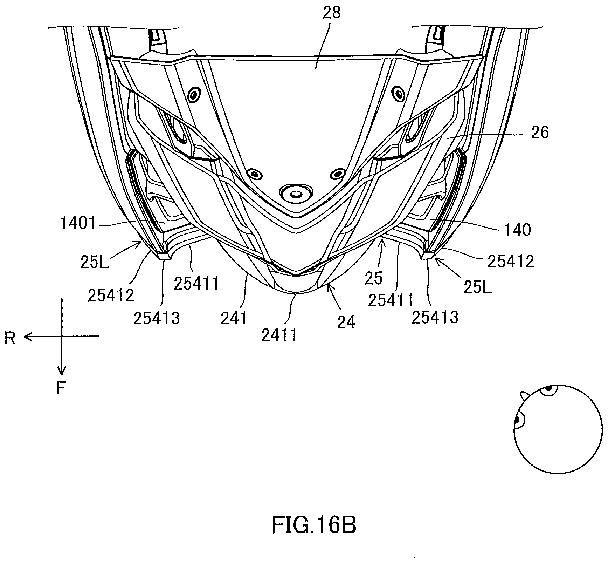

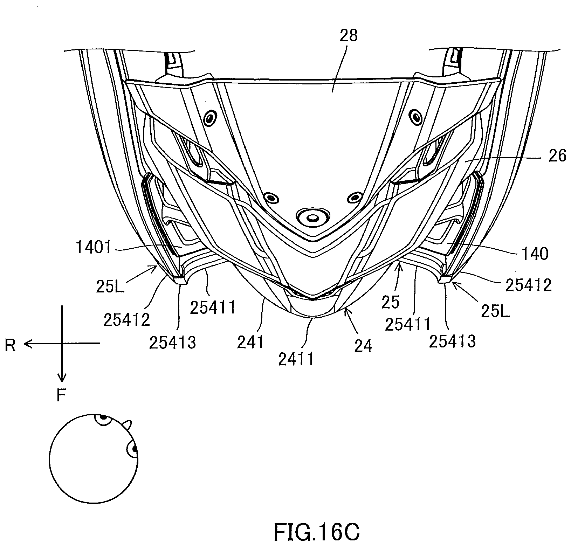

In the motorcycle 10, the forwardmost point of the outward edge, as determined along the left-right direction of the vehicle, of each of the left and right translucent sub-surfaces 25411 is located forward of the forwardmost point of its inward edge as determined along the left-right direction of the vehicle as viewed from the top of the vehicle. Thus, as shown in FIG. 16B, when one looking at the motorcycle 10 moves to the left of the motorcycle 10 from the front of the vehicle, he/she has difficulty seeing the translucent sub-surface 25411 of the position lamp 25L, but can easily see the translucent sub-surface 25411 of the position lamp 25R. Further, as shown in FIG. 16C, when he/she moves to the right of the motorcycle 10 from the front of the motorcycle 10 while looking at the vehicle , he/she has difficulty seeing the translucent sub-surface 25411 of the position lamp 25R, but can easily see the translucent sub-surface 25411 of the position lamp 25L. That is, even if he/she moves toward the left or right from the front of the motorcycle 10 while looking at the motorcycle 10, he/she can see light passed by the translucent sub-surface 25411 of one of the position lamps 25L and 25R. This will improve visibility of the vehicle.

In the motorcycle 10, the translucent sub-surface 25411 of each of the position lamps 25L and 25R is located forward of the upper and lower front cover portions 1401 and 1402. This makes the translucent sub-surface 25411 conspicuous. This makes it easier to see light passed by the translucent sub-surface 25411.

In the motorcycle 10, the translucent sub-surface 25411 of each of the position lamps 25L and 25R is located lower than the forwardmost point of the headlight 24. Thus, when one looking at the motorcycle 10 moves to the left (or right) from the front of the motorcycle 10, the translucent sub-surface 25411 of the position lamp 25R (or position lamp 25L) located farther from him/her is less likely to be hidden by the headlight 24. This makes it easier to see light passed by the translucent sub-surface 25411 of the position lamp 25R (or position lamp 25L) located farther from him/her.

In the motorcycle 10, each of the position lamps 25L and 25R includes a translucent sub-surface 25412. The translucent sub-surface 25412 is visible from the side of the vehicle. Thus, when one looking at the motorcycle 10 moves to the left (right) from the front of motorcycle 10, light passed by the translucent sub-surface 25411 of the position lamp 25L (or position lamp 25R) located closer to him/her is difficult to see, however, light passed by the translucent sub-surface 25412 is easy to see. This further improves the visibility of the vehicle.

Although an embodiment of the present invention has been described, the above-illustrated embodiment is merely an example for carrying out the present invention. Therefore, the present invention is not limited to the above-illustrated embodiment, and the above-illustrated embodiment may be modified appropriately without departing from the invention as disclosed in the claims.

For example, the above-illustrated embodiment was described where a motorcycle was discussed as an example of the straddled vehicle; alternatively, the straddled vehicle may be a leaning vehicle where the vehicle body can lean toward the direction to which the vehicle turns. The straddled vehicle may have one front wheel or two front wheels. The straddled vehicle may have one rear wheel or two rear wheels.

For example, in the above-illustrated embodiment, each of the left and right position lamps includes a plurality of light sources; alternatively, each of the left and right position lamps may include only one light source.

It will be appreciated that the term straddled vehicle or motor vehicle used herein, and as used in the art, is meant to include at least the following terms also used in the art:
straddled vehicle, straddle-type vehicle or motor vehicle, saddle-straddling type vehicle or motor vehicle, and includes: motorcycles and motorbikes as well as motor tricycles, quad bikes and All Terrain Vehicles (ATVs), scooters, mopeds and snowmobiles.

## Claims

1. A straddled vehicle, such as a motorcycle (10), comprising a position lamp system (25),
the position lamp system (25) including:
a light source; and
a lens (241) including a translucent surface system (2411) capable of passing light emitted by the light source,
the translucent surface system including a pair of first translucent sub-surfaces (25411) located to the left and right, the left and right first translucent sub-surfaces (25411) being separated from each other as determined along a left-right direction of the vehicle, **characterized in that**
each of the left and right first translucent sub-surfaces (25411) extending in the left-right direction of the vehicle, and
for each of the left and right first translucent sub-surfaces (25411), as viewed from a top of the vehicle, and as determined along the left-right direction of the vehicle, a forwardmost point (1of) of an outward edge (1o) is located forward of a forwardmost point (1if) of an inward edge (1i) as determined along the left-right direction of the vehicle.

2. The straddled vehicle according to claim 1, wherein, as viewed from a front of the vehicle, a dimension (W1) of each first translucent sub-surface (25411) as measured in the left-right direction of the vehicle is larger than a dimension (H1) of the first translucent sub-surface (25411) as determined along a top-bottom direction of the vehicle.

3. The straddled vehicle according to claim 1 or 2, wherein:
the translucent surface system further includes a pair of second translucent sub-surfaces (25412) located to the left and right, the left and right second translucent sub-surfaces (25412) being separated from each other as determined along the left-right direction of the vehicle;
each of the left and right second translucent sub-surfaces (25412) is visible from a side of the vehicle;
for each of the left and right second translucent sub-surfaces (25412), and as determined along the left-right direction of the vehicle as viewed from the top of the vehicle, a forwardmost point (2of) of an outward edge (2o) is located rearward of a forwardmost point (2if) of an inward edge (2i) as determined along the left-right direction of the vehicle;
the left second translucent sub-surface (25412) is located to the left of the left first translucent sub-surface (25411); and
the right second translucent sub-surface (25412) is located to the right of the right first translucent sub-surface (25411).

4. The straddled vehicle according to claim 3, wherein, as viewed from the top of the vehicle, a dimension (W1) of each first translucent sub-surface (25411) as measured in the left-right direction of the vehicle is larger than a dimension (W2) of the corresponding second translucent sub-surface (25412) as measured in the left-right direction of the vehicle.

5. The straddled vehicle according to claim 3 or 4, wherein, as viewed from the top of the vehicle, a dimension (L1) of each first translucent sub-surface (25411) as measured in a front-rear direction of the vehicle is larger than a dimension (L2) of the corresponding second translucent sub-surface (25412) as measured in the front-rear direction of the vehicle.

6. The straddled vehicle according to any one of claims 3 to 5, wherein:
the translucent surface system further includes a pair of third translucent sub-surfaces (25413) located to the left and right, the left and right third translucent sub-surfaces (25413) being separated from each other as determined along the left-right direction of the vehicle;
at least a part of each of the left and right third translucent sub-surfaces (25413) is located at a forwardmost point of the lens (241) as viewed from the top of the vehicle;
the left third translucent sub-surface (25413) is located between the left first translucent sub-surface (25411) and the left second translucent sub-surface (25412) as determined along the left-right direction of the vehicle and connects the left first translucent sub-surface (25411) with the left second translucent sub-surface(25412); and
the right third translucent sub-surface (25413) is located between the right first translucent sub-surface (25411) and the right second translucent sub-surface (25412) as determined along the right-right direction of the vehicle and connects the right first translucent sub-surface (25411) with the right second translucent sub-surface (25412).

7. The straddled vehicle according to any one of claims 1 to 6, wherein, as viewed from a front of the vehicle, the outward edge (1o), as determined along the left-right direction of the vehicle, of each first translucent sub-surface (25411) is located at a different position as determined along the top-bottom direction of the vehicle from that of the inward edge (1i), as determined along the left-right direction of the vehicle, of the first translucent sub-surface (25411).

8. The straddled vehicle according to claim 7, wherein, as viewed from the front of the vehicle, at least a part of the outward edge (1o), as determined along the left-right direction of the vehicle, of each first translucent sub-surface (25411) is located lower than the inward edge (1i), as determined along the left-right direction of the vehicle, of the first translucent sub-surface (25411).

9. The straddled vehicle according to any one of claims 1 to 8, further comprising a headlight (24) located between the left and right first translucent sub-surfaces (25411) as viewed from a front of the vehicle,
wherein at least a part of each of the left and right first translucent sub-surfaces (25411) is located lower than a forwardmost point of the headlight (24).

10. The straddled vehicle according to any one of claims 1 to 9, further comprising a front cover (140) visible from a front of the vehicle, wherein the position lamp system (25) is attached to the front cover.

11. The straddled vehicle according to claim 10, wherein the front cover (140) includes:
an upper front cover portion (1401), at least a part of the upper front cover portion (1401) being located higher than the position lamp system (25) as viewed from the front of the vehicle; and
a lower front cover portion (1402), at least a part of the lower front cover portion (1402) being located lower than the position lamp system (25) as viewed from the front of the vehicle,
wherein the first translucent sub-surfaces (25411) are located forward of the upper and lower front cover portions (1401, 1402).

12. A straddled vehicle, such as a motorcycle (10), comprising a position lamp system (10),
the position lamp system (25) including:
a light source; and
a lens (241) including a translucent surface system (2411) capable of passing light emitted by the light source,
the translucent surface system including a pair of first translucent sub-surfaces (25411) located to the left and right, the left and right first translucent sub-surfaces (25411) being separated from each other as determined along a left-right direction of the vehicle, **characterized in that**
each of the left and right first translucent sub-surfaces (25411) extends in the left-right direction of the vehicle, and
as viewed from a top of the vehicle, a forwardmost point (1of) of an outward edge, as determined along the left-right direction of the vehicle, of each of the left and right first translucent sub-surfaces (25411) is located forward of a forwardmost point (1if) of an inward edge (1i) as determined along the left-right direction of the vehicle.

## Patentansprüche

1. Reitsitzfahrzeug, wie beispielsweise ein Motorrad (10), das ein Positionsleuchtensystem (25) umfasst,
wobei das Positionsleuchtensystem (25) Folgendes einschließt:
eine Lichtquelle und
eine Linse (241), die ein durchscheinendes Flächensystem (2411) einschließt, das dazu in der Lage ist, Licht durchzulassen, das durch die Lichtquelle ausgestrahlt wird,
wobei das durchscheinende Flächensystem ein Paar von ersten durchscheinenden Unterflächen (25411) einschließt, die links und rechts angeordnet sind, wobei die linke und die rechte erste durchscheinende Unterfläche (25411), bestimmt entlang einer Richtung des Fahrzeugs von links nach rechts, voneinander getrennt sind, **dadurch gekennzeichnet, dass**
sich sowohl die linke als auch die rechte erste durchscheinende Unterfläche (25411) in der Richtung des Fahrzeugs von links nach rechts erstreckt und
für sowohl die linke als auch die rechte erste durchscheinende Unterfläche (25411), gesehen von einer Oberseite des Fahrzeugs und bestimmt entlang der Richtung des Fahrzeugs von links nach rechts, ein vorderster Punkt (1of) einer äußeren Kante (1o) vor einem vordersten Punkt (1if) einer inneren Kante (1i), bestimmt entlang der Richtung des Fahrzeugs von links nach rechts, angeordnet ist.

2. Reitsitzfahrzeug nach Anspruch 1, wobei, gesehen von einer Vorderseite des Fahrzeugs, eine Abmessung (W1) jeder ersten durchscheinenden Unterfläche (25411), gemessen in der Richtung des Fahrzeugs von links nach rechts, größer ist als eine Abmessung (H1) der ersten durchscheinenden Unterfläche (25411), bestimmt entlang der Richtung des Fahrzeugs von oben nach unten.

3. Reitsitzfahrzeug nach Anspruch 1 oder 2, wobei:
das durchscheinende Flächensystem ferner ein Paar von zweiten durchscheinenden Unterflächen (25412) einschließt, die links und rechts angeordnet sind, wobei die linke und die rechte zweite durchscheinende Unterfläche (25412), bestimmt entlang der Richtung des Fahrzeugs von links nach rechts, voneinander getrennt sind,
sich sowohl die linke als auch die rechte zweite durchscheinende Unterfläche (25412) von einer Seite des Fahrzeugs aus sichtbar ist,
für sowohl die linke als auch die rechte zweite durchscheinende Unterfläche (25412) und bestimmt entlang der Richtung des Fahrzeugs von links nach rechts, gesehen von der Oberseite des Fahrzeugs, ein vorderster Punkt (2of) einer äußeren Kante (2o) hinter einem vordersten Punkt (2if) einer inneren Kante (2i), bestimmt entlang der Richtung des Fahrzeugs von links nach rechts, angeordnet ist,
die linke zweite durchscheinende Unterfläche (25412) links von der linken ersten durchscheinenden Unterfläche (25411) angeordnet ist und
die rechte zweite durchscheinende Unterfläche (25412) rechts von der rechten ersten durchscheinenden Unterfläche (25411) angeordnet ist.

4. Reitsitzfahrzeug nach Anspruch 3, wobei, gesehen von der Oberseite des Fahrzeugs, eine Abmessung (W1) jeder ersten durchscheinenden Unterfläche (25411), gemessen in der Richtung des Fahrzeugs von links nach rechts, größer ist als eine Abmessung (W2) der entsprechenden zweiten durchscheinenden Unterfläche (25412), gemessen in der Richtung des Fahrzeugs von links nach rechts.

5. Reitsitzfahrzeug nach Anspruch 3 oder 4, wobei, gesehen von der Oberseite des Fahrzeugs, eine Abmessung (L1) jeder ersten durchscheinenden Unterfläche (25411), gemessen in der Richtung des Fahrzeugs von vorn nach hinten, größer ist als eine Abmessung (L2) der entsprechenden zweiten durchscheinenden Unterfläche (25412), gemessen in der Richtung des Fahrzeugs von vorn nach hinten.

6. Reitsitzfahrzeug nach einem der Ansprüche 3 bis 5, wobei:
das durchscheinende Flächensystem ferner ein Paar von dritten durchscheinenden Unterflächen (25413) einschließt, die links und rechts angeordnet sind, wobei die linke und die rechte dritte durchscheinende Unterfläche (25413), bestimmt entlang der Richtung des Fahrzeugs von links nach rechts, voneinander getrennt sind,
sich wenigstens ein Teil sowohl der linken als auch der rechten dritten durchscheinenden Unterfläche (25413) an einem vordersten Punkt der Linse (241), gesehen von der Oberseite des Fahrzeugs, erstreckt,
die linke dritte durchscheinende Unterfläche (25413) zwischen der linken ersten durchscheinenden Unterfläche (25411) und der linken zweiten durchscheinenden Unterfläche (25412), bestimmt entlang der Richtung des Fahrzeugs von links nach rechts, angeordnet ist und die linke erste durchscheinende Unterfläche (25411) mit der linken zweiten durchscheinenden Unterfläche (25412) verbindet und
die rechte dritte durchscheinende Unterfläche (25413) zwischen der rechten ersten durchscheinenden Unterfläche (25411) und der rechten zweiten durchscheinenden Unterfläche (25412), bestimmt entlang der Richtung des Fahrzeugs von rechts nach rechts, angeordnet ist und die rechte erste durchscheinende Unterfläche (25411) mit der rechten zweiten durchscheinenden Unterfläche (25412) verbindet.

7. Reitsitzfahrzeug nach einem der Ansprüche 1 bis 6, wobei, gesehen von einer Vorderseite des Fahrzeugs, die äußere Kante (1o), bestimmt entlang der Richtung des Fahrzeugs von links nach rechts, jeder ersten durchscheinenden Unterfläche (25411) an einer Position angeordnet ist, bestimmt entlang der Richtung des Fahrzeugs von oben nach unten, die sich von derjenigen der inneren Kante (1i), bestimmt entlang der Richtung des Fahrzeugs von links nach rechts, der ersten durchscheinenden Unterfläche (25411) unterscheidet.

8. Reitsitzfahrzeug nach Anspruch 7, wobei, gesehen von der Vorderseite des Fahrzeugs, wenigstens ein Teil der äußeren Kante (1o), bestimmt entlang der Richtung des Fahrzeugs von links nach rechts, jeder ersten durchscheinenden Unterfläche (25411) niedriger angeordnet ist als die innere Kante (1i), bestimmt entlang der Richtung des Fahrzeugs von links nach rechts, der ersten durchscheinenden Unterfläche (25411).

9. Reitsitzfahrzeug nach einem der Ansprüche 1 bis 8, das ferner einen Frontscheinwerfer (24) umfasst, der zwischen der linken und der rechten ersten durchscheinenden Unterfläche (25411), gesehen von einer Vorderseite des Fahrzeugs, angeordnet ist,
wobei wenigstens ein Teil der linken und der rechten ersten durchscheinenden Unterfläche (25411) niedriger angeordnet ist als ein vorderster Punkt des Frontscheinwerfers (24).

10. Reitsitzfahrzeug nach einem der Ansprüche 1 bis 9, das ferner eine Frontabdeckung (140) umfasst, die von einer Vorderseite des Fahrzeugs aus sichtbar ist, wobei das Positionsleuchtensystem (25) an der Frontabdeckung befestigt ist.

11. Reitsitzfahrzeug nach Anspruch 10, wobei die Frontabdeckung (140) Folgendes einschließt:
einen oberen Frontabdeckungsabschnitt (1401), wobei wenigstens ein Teil des oberen Frontabdeckungsabschnitts (1401) höher als das Positionsleuchtensystem (25), gesehen von der Vorderseite des Fahrzeugs, angeordnet ist, und
einen unteren Frontabdeckungsabschnitt (1402), wobei wenigstens ein Teil des unteren Frontabdeckungsabschnitts (1402) niedriger als das Positionsleuchtensystem (25), gesehen von der Vorderseite des Fahrzeugs, angeordnet ist,
wobei die ersten durchscheinenden Unterflächen (25411) vor dem oberen und dem unteren Frontabdeckungsabschnitt (1401, 1402) angeordnet sind.

12. Reitsitzfahrzeug, wie beispielsweise ein Motorrad (10), das ein Positionsleuchtensystem (10) umfasst,
wobei das Positionsleuchtensystem (25) Folgendes einschließt:
eine Lichtquelle und
eine Linse (241), die ein durchscheinendes Flächensystem (2411) einschließt, das dazu in der Lage ist, Licht durchzulassen, das durch die Lichtquelle ausgestrahlt wird,
wobei das durchscheinende Flächensystem ein Paar von ersten durchscheinenden Unterflächen (25411) einschließt, die links und rechts angeordnet sind, wobei die linke und die rechte erste durchscheinende Unterfläche (25411), bestimmt entlang einer Richtung des Fahrzeugs von links nach rechts, voneinander getrennt sind, **dadurch gekennzeichnet, dass**
sich sowohl die linke als auch die rechte erste durchscheinende Unterfläche (25411) in der Richtung des Fahrzeugs von links nach rechts erstreckt und,
gesehen von einer Oberseite des Fahrzeugs, ein vorderster Punkt (1of) einer äußeren Kante, bestimmt entlang der Richtung des Fahrzeugs von links nach rechts, sowohl der linken als auch der rechten ersten durchscheinenden Unterfläche (25411) vor einem vordersten Punkt (1if) einer inneren Kante (1i), bestimmt entlang der Richtung des Fahrzeugs von links nach rechts, angeordnet ist.

## Revendications

1. Véhicule à enfourcher, comme une moto (10), comprenant un système de feu de position (25),
le système de feu de position (25) incluant :
une source de lumière ; et
une lentille (241) incluant un système de surface translucide (2411) capable de faire passer de la lumière émise par la source lumineuse,
le système de surface translucide incluant une paire de premières sous-surfaces translucides (25411) situées sur la gauche et la droite, les premières sous-surfaces translucides gauche et droite (25411) étant séparées l'une de l'autre comme déterminé le long d'une direction gauche-droite du véhicule, **caractérisé en ce que**
chacune des premières sous-surfaces translucides gauche et droite (25411) s'étend dans la direction gauche-droite du véhicule, et
pour chacune des premières sous-surfaces translucides gauche et droite (25411), telles que visualisées depuis une partie haute du véhicule, et comme déterminé le long de la direction gauche-droite du véhicule, un point le plus en avant (1of) d'un bord vers l'extérieur (1o) est situé en avant d'un point le plus en avant (1if) d'un bord vers l'intérieur (1i), comme déterminé le long de la direction gauche-droite du véhicule.

2. Véhicule à enfourcher selon la revendication 1, dans lequel, comme visualisé depuis l'avant du véhicule, une dimension (W1) de chaque première sous-surface translucide (25411), telle que mesurée dans la direction gauche-droite du véhicule, est supérieure à une dimension (H1) de la première sous-surface translucide (25411) comme déterminé le long d'une direction haut-bas du véhicule.

3. Véhicule à enfourcher selon la revendication 1 ou 2, dans lequel :
le système de surface translucide inclut en outre une paire de deuxièmes sous-surfaces translucides (25412) situées sur la gauche et la droite, les deuxièmes surface gauche et droite (25412) étant séparées l'une de l'autre comme déterminé le long de la direction gauche-droite du véhicule ;
chacune des deuxièmes sous-surfaces translucides gauche et droite (25412) est visible depuis un côté du véhicule ;
pour chacune des deuxièmes sous-surfaces translucides gauche et droite (25412), et comme déterminé le long de la direction gauche-droite du véhicule, telle que visualisée depuis le haut du véhicule, un point le plus en avant (2of) d'un bord vers l'extérieur (2o) est situé vers l'arrière d'un point le plus en avant (2if) d'un bord vers l'intérieur (2i) comme déterminé le long de la direction gauche-droite du véhicule ;
la deuxième sous-surface translucide gauche (25412) est située sur la gauche de la première sous-surface translucide gauche (25411) ; et
la deuxième sous-surface translucide droite (25412) est située sur la droite de la première sous-surface translucide droite (25411).

4. Véhicule à enfourcher, selon la revendication 3, dans lequel, comme visualisé depuis le haut du véhicule, une dimension (W1) de chaque première sous-surface translucide (25411), comme mesurée dans la direction gauche-droite du véhicule est supérieure à une dimension (W2) de la deuxième sous-surface translucide correspondante (25412), comme mesuré dans la direction gauche-droite du véhicule.

5. Véhicule à enfourcher, selon la revendication 3 ou 4, dans lequel, comme visualisé depuis le haut du véhicule, une dimension (L1) de chaque première sous-surface translucide (25411), comme mesurée dans la direction avant-arrière du véhicule est supérieure à une dimension (L2) de la deuxième sous-surface translucide correspondante (25412) comme mesurée dans la direction avant-arrière du véhicule.

6. Véhicule à enfourcher, selon l'une quelconque des revendications 3 à 5, dans lequel :
le système de surface translucide inclut en outre une paire de troisièmes sous-surfaces translucides (25413) situées vers la gauche et la droite, les troisièmes sous-surfaces translucides gauche et droite (25413) étant séparées l'une de l'autre comme déterminé le long de la direction gauche-droite du véhicule ;
au moins une partie de chacune des troisièmes sous-surfaces translucides gauche et droite (25413) est située en un point le plus en avant de la lentille (241) comme visualisé depuis le haut du véhicule ;
la troisième sous-surface translucide gauche (25413) est située entre la première sous-surface translucide gauche (25411) et la deuxième sous-surface translucide gauche (25412) comme déterminé le long de la direction gauche-droite du véhicule et relie la première sous-surface translucide gauche (25411) avec la deuxième sous-surface translucide gauche (25412) ; et
la troisième sous-surface translucide droite (25413) est située entre la première sous-surface translucide droite (25411) et la deuxième sous-surface translucide droite (25412), comme déterminé le long de la direction droite-droite du véhicule et relie la première sous-surface translucide droite (25411) avec la deuxième sous-surface translucide droite (25412).

7. Véhicule à enfourcher selon l'une quelconque des revendications 1 à 6, dans lequel, comme visualisé depuis une partie avant du véhicule, le bord vers l'extérieur (1o), comme déterminé le long de la direction gauche-droite du véhicule, de chaque première sous-surface translucide (25411) est situé dans une position différente, comme déterminé le long de la direction haut-bas du véhicule depuis celle du bord vers l'intérieur (1i) comme déterminé le long de la direction gauche-droite du véhicule de la première sous-surface translucide (25411).

8. Véhicule à enfourcher selon la revendication 7, dans lequel comme visualisé depuis l'avant du véhicule, au moins une partie du bord vers l'extérieur (1o), comme déterminé le long de la direction gauche-droite du véhicule, de chaque première sous-surface translucide (25411) est située plus bas que le bord vers l'intérieur (1i), comme déterminé le long de la direction gauche-droite du véhicule, de la première sous-surface translucide (25411).

9. Véhicule à enfourcher selon l'une quelconque des revendications 1 à 8, comprenant en outre un phare (24) situé entre les premières sous-surfaces translucides gauche et droite (25411) comme visualisé depuis une partie avant du véhicule,
dans lequel au moins une partie de chacune des premières sous-surfaces translucides gauche et droite (25411) est située plus bas qu'un point le plus en avant du phare (24).

10. Véhicule à enfourcher selon l'une quelconque des revendications 1 à 9, comprenant en outre un capot avant (140) visible depuis une partie avant du véhicule, dans lequel le système de feu de position (25) est fixé au capot avant.

11. Véhicule à enfourcher selon la revendication 10, dans lequel le capot avant (140) inclut :
une partie de capot supérieur avant (1401), au moins une partie du capot avant supérieur (1401) étant située plus haut que le système de feu de position (25) comme visualisé depuis l'avant du véhicule ; et
une partie du capot avant inférieur (1402), au moins une partie du capot avant inférieur (1402) étant située plus bas que le système de feu de position (25) comme visualisé depuis l'avant du véhicule,
dans lequel les premières sous-surfaces translucides (25411) sont situées vers l'avant des parties de capot avant supérieure et inférieure (1401, 1402).

12. Véhicule à enfourcher, comme une moto (10), comprenant un système de feu de position (10),
le système de feu de position (25) incluant :
une source de lumière ; et
une lentille (241) incluant un système de surface translucide (2411) capable de faire passer de la lumière émise par la source de lumière,
le système de surface translucide incluant une paire de premières sous-surfaces translucides (25411) situées sur la gauche et la droite, les premières sous-surfaces translucides gauche et droite (25411) étant séparées l'une de l'autre comme déterminé le long d'une direction gauche-droite du véhicule, **caractérisé en ce que**
chacune des premières sous-surfaces translucides gauche et droite (25411) s'étend dans la direction gauche-droite du véhicule, et
comme visualisé depuis une partie supérieure du véhicule, un point le plus en avant (1of) d'un bord vers l'extérieur, comme déterminé le long de la direction gauche-droite du véhicule, de chacune des premières sous-surfaces translucides gauche et droite (25411) est situé en avant d'un point le plus en avant (1if) d'un bord vers l'intérieur (1i), comme déterminé le long de la direction gauche-droite du véhicule.
